# EUROPÄISCHE PATENTSCHRIFT

(11) **EP 3 235 184 B1**
(45) Veröffentlichungstag und Bekanntmachung des Hinweises auf die Patenterteilung: **21.04.2021**
(21) Anmeldenummer: 15816428.5
(22) Anmeldetag: 15.12.2015
(51) Int. Cl.: H04L 12/40

(54) **FUNKTIONSANSCHLUSSEINHEIT MIT EINEM PARAMETERSPEICHER**
FUNCTION CONNECTION UNIT COMPRISING A PARAMETER MEMORY
UNITÉ FONCTIONNELLE DE RACCORDEMENT DOTÉE D'UNE MÉMOIRE DE PARAMÈTRES

(30) Priorität: 18.12.2014 DE 102014119101
(43) Veröffentlichungstag der Anmeldung: 25.10.2017
(73) Patentinhaber: Phoenix Contact GmbH & Co. KG, 32825 Blomberg (DE)
(72) Erfinder: KRUMSIEK, Dietmar, 31860 Emmerthal (DE)
(74) Vertreter: Patentship Patentanwaltsgesellschaft mbH
(86) Internationale Anmeldenummer: PCT/EP2015/079851
(87) Internationale Veröffentlichungsnummer: WO 2016/096892

(56) Entgegenhaltungen:
- WO-A1-2013/178210
- DE-A1-102009 006 662
- GB-A- 2 403 042
- "IO-Link Interface and System - Specification - Version 1.1.2", , 1. Juli 2013 (2013-07-01), XP055254981, Gefunden im Internet: URL:http://www.io-link.com/share/Downloads /Spec-Interface/IOL-Interface-Spec_10002_V 112_Jul13.pdf [gefunden am 2016-03-03]

## Beschreibung

Die vorliegende Erfindung betrifft eine Funktionsanschlusseinheit mit einem Parameterspeicher.

Zum Anschluss und zur Konfiguration von Funktionsmodulen der Automatisierungstechnik wie Aktoren oder Sensoren werden üblicherweise Funktionsanschlusseinheiten, auch I/O-Master genannt, eingesetzt, welche beispielsweise gemäß dem Single-Drop Digital Communication Interface for Small Sensors and Actuators (SDCI)-Protokoll arbeiten. Ein Beispiel einer SDCI-Funktionsanschlusseinheit ist der I/O-Link-Master, welcher beispielsweise in der DE 10 2011 006590 A1 beschrieben ist.

Die an eine Funktionsanschlusseinheit angeschlossenen Funktionsmodule müssen für die gewünschte Betriebsweise jedoch parametrisiert, also gerätespezifisch konfiguriert werden. Dies erfolgt üblicherweise durch eine Parametrisierung der Funktionsmodule, wobei beispielsweise Sensorempfindlichkeiten eingestellt werden können. Die Parametrierung der Funktionsmodule wird üblicherweise mittels einer speziellen Serviceschnittstelle vorab durch einen Servicetechniker durchgeführt, was jedoch mit hohem Aufwand verbunden ist.

Die Internet-Veröffentlichung "IO-Link Interface and System - Specification - Version 1.1.2", 1. Juli 2013 (2013-07-01), XP055254981, offenbart ein auf der IO-Link-Schnittstelle basierendes System. Die DE 10 2009 006 662 A1 offenbart eine Parametriereinrichtung und Verfahren zu ihrem Betrieb. Die WO 2013 / 178210 A1 offenbart ein Feldbussystem. Die GB 2 403 042 A offenbart ein Verfahren zum Ersetzen eines ersten Feldgerätes in einem Prozesskontrollsystem durch ein zweites Feldgerät.

Es ist daher die Aufgabe der vorliegenden Erfindung, ein effizienteres Konzept für den Anschluss von Funktionsmodulen in der Automatisierungstechnik zu schaffen.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Die vorliegende Erfindung basiert auf der Erkenntnis, dass die Funktionsmodule automatisch durch eine Funktionsanschlusseinheit parametriert werden können, wenn ein Parameterspeicher mit Parameterdaten, welche die Parameter beschreiben oder angeben, verwendet wird. Der Parameterspeicher kann mit einem Funktionsmodulanschuss verbunden werden, mit dem üblicherweise ein Funktionsmodul verbindbar ist. Auf diese Weise entfällt die Notwendigkeit einer speziellen Serviceschnittstelle zur Parametrierung der Funktionsmodule. Außerdem kann die Funktionsanschlusseinheit automatisch auf der Basis der durch den Parameterspeicher bereitgestellten Parameterdaten die Funktionsmodule parametrisieren.

Die Parameterdaten können anhand einer allgemeinen Parameterdatenbeschreibung, welche parametrisierbare Parameter auflistet und beispielsweise in der Gestalt einer XML-Datei vorliegt, beispielsweise durch einen Benutzer mittels eines Computers und ggf. einer Inbetriebnahmesoftware erstellt werden.

Gemäß einem ersten Aspekt betrifft die Erfindung eine Anordnung, umfassend eine Funktionsanschlusseinheit und einen Parameterspeicher, gemäß Anspruch 1.

Die Parameterdaten ermöglichen eine gerätespezifische Parametrisierung bzw. Konfiguration der Funktionsmodule. Die Parameterdaten können beispielsweise technische Empfindlichkeiten, Schaltverzögerungen, Kennlinien oder Wertebereiche der Funktionsmodule angeben. Außerdem können die Parameterdaten Informationen zur Identifikation der Funktionsmodule, Prozess- und Diagnosedaten, Kommunikationseigenschaften und den Aufbau des Anwender-Interfaces in Engineering Tools angeben. Die Parameterdaten können in der Gestalt einer oder mehrerer Dateien vorliegen, z.B. einer Hauptdatei und einer optionalen externen Sprachdatei, beispielsweise in XML-Format. Die Parameterdaten können ferner Bilddateien im PNG-Format umfassen. Im Kontext der I/O-Link-Technologie können die Parameterdaten in einer I/ODD-Datei (I/O Device Description) vorliegen.

Die Funktionsmodule sind beispielsweise Sensoren oder Aktoren gemäß der Norm IEC 61131-9.

Dadurch wird der technische Vorteil erreicht, dass zur Parametrierung der Funktionsmodule, beispielsweise Sensoren oder Aktoren, keine spezielle Serviceschnittstelle mehr vorgesehen sein muss. Außerdem ist zur Parametrierung der Funktionsmodule keine externe Kommunikationsverbindung, wie etwa ein Feldbus, notwendig.

Bei dem Kommunikationsprotokoll kann es sich um ein Kommunikationsprotokoll gemäß I/O-Link oder "Single-Drop Digital Communication Interface for Small Sensors and Actuators (SDCI)" handeln. Der I/O-Link ist eine Punkt-zu-Punkt-Schnittstelle für den Funktionsmodulanschluss beliebiger Sensorik und Aktuatorik beispielsweise an ein Steuerungssystem. Gemäß SDCI wird eine Anbindung von Funktionsmodulen, wie z.B. Sensoren und/oder Aktoren in Übereinstimmung mit der Norm IEC 61131-9 durchgeführt.

In einer vorteilhaften Ausführungsform ist die Funktionsanschlusseinheit ein Master gemäß dem SDCI-Protokoll, insbesondere ein I/O-Linkmaster. Somit ist eine Anbindung von intelligenten Funktionsmodulen, wie z.B. Sensoren und/oder Aktoren gemäß der Norm IEC 61131-9 möglich.

Der Parameterspeicher ist ausgebildet, ein Kennsignal auszusenden, das den Parameterspeicher identifiziert, wobei die Funktionsanschlusseinheit ausgebildet ist, den Parameterspeicher an dem Funktionsmodulanschluss auf der Basis des Kennsignals zu erkennen oder von einem Funktionsmodul zu unterscheiden. Das Kennsignal kann beispielsweise ein Bitmuster umfassen, das auf den an den Funktionsmodulanschluss statt eines Funktionsmoduls angeschlossenen Parameterspeicher hinweist. Auf diese Weise kann die Funktionsanschlusseinheit erkennen, dass an dem Funktionsmodulanschluss statt eines Funktionsmoduls ein Parameterspeicher angeschlossen ist, und die Parameterdaten aus dem Parameterspeicher über den Funktionsmodulanschluss auslesen. Dadurch wird eine einfache Erkennung des Parameterspeichers an dem Funktionsmodulanschluss ermöglicht, sodass eine spezielle Service-Schnittstelle entfallen kann.

In einer weiteren vorteilhaften Ausführungsform ist die Funktionsanschlusseinheit ausgebildet, die vorgespeicherten Parameterdaten aus dem Parameterspeicher auszulesen, um den zumindest einen Funktionsmodulanschluss gerätespezifisch zu parametrisieren, mit dem das zumindest eine Funktionsmodul verbunden ist. Dadurch wird der technische Vorteil erreicht, dass die Parameterdaten nicht über einen Feldbus der Funktionsanschlusseinheit zugeführt werden müssen.

In einer weiteren vorteilhaften Ausführungsform ist der Parameterspeicher ausgebildet, die Parameterdaten von dem Parameterspeicher zu der Funktionsanschlusseinheit über den Funktionsmodulanschluss zu übertragen.

In einer weiteren vorteilhaften Ausführungsform ist die Funktionsanschlusseinheit ausgebildet, die ausgelesenen Parameterdaten zu speichern. Dadurch kann der Parameterspeicher entfernt werden, wodurch der zuvor durch den Parameterspeicher belegte Funktionsanschluss für ein weiteres Funktionsmodul frei wird. Das weitere Funktionsmodul kann unter Verwendung der in der Funktionsanschlusseinheit gespeicherten Parameterdaten parametrisiert werden.

In einer weiteren vorteilhaften Ausführungsform ist der Parameterspeicher von dem Funktionsmodulanschluss lösbar, wobei mit dem Funktionsmodulanschluss ein Funktionsmodul elektrisch verbindbar ist, und wobei die Funktionsanschlusseinheit ausgebildet ist, das anstelle des Parameterspeichers mit dem Funktionsmodulanschluss verbundene Funktionsmodul unter Verwendung der in der Funktionsanschlusseinheit vorgespeicherten Parameterdaten gerätespezifisch zu parametrisieren.

In einer weiteren vorteilhaften Ausführungsform ist der Parameterspeicher ausgebildet, eine Datenüberübertragungsverbindung zur Übertragung der Parameterdaten von dem Parameterspeicher zu der Funktionsanschlusseinheit herzustellen.

Ein Funktionsmodul ist mit dem Parameterspeicher verbunden oder verbindbar, wobei die Funktionsanschlusseinheit ausgebildet ist, das Funktionsmodul über den Funktionsmodulanschluss, mit dem der Parameterspeicher elektrisch verbunden ist, auf der Basis der Parameterdaten gerätespezifisch zu parametrisieren. Der Parameterspeicher kann mit dem Funktionsmodul dauerhaft oder lösbar verbunden sein. Auf diese Weise kann das Funktionsmodul des Parameterspeichers über den Funktionsanschluss betrieben werden, mit dem auch der Parameterspeicher verbunden ist, ohne den Parameterspeicher zu lösen.

Der Parameterspeicher ist in einen Transparentmodus schaltbar, in dem Daten von der Funktionsanschlusseinheit zu dem zumindest einem Funktionsmodul über den Parameterspeicher und/oder Daten von dem zumindest einem Funktionsmodul zu der Funktionsanschlusseinheit über den Parameterspeicher weiterleitbar sind, um einen Betrieb des mit dem Parameterspeicher verbundenen Funktionsmoduls zu ermöglichen. Es ist also nicht nötig, den Parameterspeicher zu entfernen, um einen Betrieb des mit dem Parameterspeicher verbundenen Funktionsmoduls zu ermöglichen.

In einer weiteren vorteilhaften Ausführungsform ist die Funktionsanschlusseinheit ausgebildet, den Parameterspeicher in einen Speicherschreibmodus zu schalten, in dem der Parameterspeicher mit Daten beschreibbar ist.

In einer weiteren vorteilhaften Ausführungsform ist die Funktionsanschlusseinheit ausgebildet, einen Wechsel des im Transparentmodus befindlichen Parameterspeichers in einen Speicherschreibmodus zu bewirken, in dem der Parameterspeicher mit Daten beschreibbar ist. Dadurch wird der technische Vorteil erreicht, dass ein erneuter Wechsel des Betriebsmodus möglich ist. Somit ist die Flexibilität gesteigert.

In einer weiteren vorteilhaften Ausführungsform ist die Funktionsanschlusseinheit ausgebildet, während des Speicherschreibmodus eine Datenübertragungsverbindung zur Datenübertragung zwischen der Funktionsanschlusseinheit und dem zumindest einen Funktionsmodul zu unterbrechen. Dadurch wird der technische Vorteil erreicht, dass nach dem Auslesen des Parameterspeichers ein Speicher des Parameterspeichers genutzt werden kann, um weitere Daten zu speichern, z.B. um einen Speicher der Funktionsanschlusseinheit zu erweitern. So wird der Speicherbedarf der Funktionsanschlusseinheit reduziert.

In einer weiteren vorteilhaften Ausführungsform weist der Parameterspeicher eine Schnittstelle zur Datenübertragung gemäß einem zweiten Kommunikationsprotokoll auf. Dadurch wird der technische Vorteil erreicht, dass der Speicher des Parameterspeichers über eine weitere Schnittstelle mit Daten, wie z.B. Funktionsmodulparameterdaten, beschrieben und/oder ausgelesen werden kann. Somit wird die Handhabbarkeit gesteigert. Dabei sind das ersten und das zweite Kommunikationsprotokoll unterschiedlich.

In einer weiteren vorteilhaften Ausführungsform ist das zweite Kommunikationsprotokoll ein USB-Protokoll. Dadurch wird der technische Vorteil erreicht, dass eine weit verbreitete und zuverlässige Schnittstelle für eine Datenübertragung zur Verfügung gestellt wird.

In einer weiteren vorteilhaften Ausführungsform weist der Parameterspeicher ein Bedienelement auf, mit dem eine Übertragung der Parameterdaten aus dem Parameterspeicher in die Funktionsanschlusseinheit auslösbar ist. Dadurch wird der technische Vorteil erreicht, dass eine Unterbrechung der Datenübertragungsverbindung wieder aufgehoben werden kann, so dass wieder Daten über die Datenübertragungsverbindung von dem Protokolldatensatz zu der Funktionsanschlusseinheit und umgekehrt übertragen werden können. Dann befindet sich die Parametrisierungsschnittstelle wieder in dem Tunnelmodus.

In einer weiteren vorteilhaften Ausführungsform geben die Parameterdaten physikalische Werte von gerätespezifischen Parametern an.

In einer weiteren vorteilhaften Ausführungsform sind die Funktionsmodule Sensoren oder Aktoren.

In einer weiteren vorteilhaften Ausführungsform bildet eine Parametrisierungsschnittstelle eine Kommunikationsschnittstelle der Funktionseinheit für die Übertragung von Daten, insbesondere von Parameterdaten, Steuerbefehlen zur Steuerung der Funktionsmodule oder zum Auslesen von Daten aus der Funktionsmodulen oder zur Steuerung der Funktionsanschlusseinheit oder zum Auslesen von Daten aus der Funktionsanschlusseinheit.

Gemäß einem weiteren Aspekt betrifft die Erfindung einen Parameterspeicher gemäß Anspruch 10.

In einer weiteren vorteilhaften Ausführungsform ist der Parameterspeicher ausgebildet, Parameterdaten für die gerätespezifische Parametrisierung von zumindest einem Funktionsmodul über den Funktionsmodulparameteranschluss, insbesondere ansprechend auf den Empfang einer Aufforderung, auszusenden.

In einer weiteren vorteilhaften Ausführungsform weist der Parameterspeicher ein Funktionsmodul gemäß dem Single-Drop Digital Communication Interface for Small Sensors and Actuators (SDCI)-Protokoll auf.

Der Parameterspeicher ist in einen Transparentmodus überführbar, um eine direkte Kommunikationsverbindung zwischen dem Funktionsmodulparameteranschluss des Parameterspeichers und dem Funktionsmodul herzustellen.

Die Parameterdaten können die Eigenschaften der vorgenannten Parameter angeben.

In einer weiteren vorteilhaften Ausführungsform ist der Parameterspeicher ausgebildet, eine Datenüberübertragungsverbindung zur Übertragung der vorgespeicherten Parameterdaten von dem Parameterspeicher zu der Funktionsanschlusseinheit herzustellen. Dadurch wird der technische Vorteil erreicht, dass die Parameterdaten zuverlässig zu der Funktionsanschlusseinheit übertragen werden. So ist die Betriebssicherheit gesteigert.

In einer weiteren vorteilhaften Ausführungsform ist der Parameterspeicher in einem Transparentmodus betreibbar, in dem Daten von der Funktionsanschlusseinheit zu dem zumindest einem Funktionsmodul durch den Parameterspeicher und/oder Daten von dem zumindest einem Funktionsmodul zu der Funktionsanschlusseinheit durch den Parameterspeicher weiterleitbar sind. Dadurch wird der technische Vorteil erreicht, dass nach einer Übertragung von Daten, z.B. von Funktionsmodulparameterdaten, dann weitere Daten weitergeleitet werden können. Somit wird die Funktionalität des Kommunikationssystems nicht beeinträchtigt. Daher ist ein problemloser Betrieb des Kommunikationssystems möglich, nachdem z.B. neue Parameterdaten aus dem Parameterspeicher ausgelesen wurden. Es ist also nicht nötig, den Parameterspeicher zu entfernen, um einen Betrieb des Funktionsmoduls zu ermöglichen.

In einer weiteren vorteilhaften Ausführungsform ist die Funktionsanschlusseinheit ausgebildet, einen Wechsel eines im Transparentmodus befindlichen Parameterspeichers in einen Speicherschreibmodus zu bewirken, in dem der Parameterspeicher mit Daten beschreibbar ist.

In einer weiteren vorteilhaften Ausführungsform ist der Parameterspeicher ausgebildet, während des Speicherschreibmodus eine Datenübertragungsverbindung zur Datenübertragung zwischen der Funktionsanschlusseinheit und dem zumindest einen Funktionsmodul zu unterbrechen. Dadurch wird der technische Vorteil erreicht, dass nach dem Auslesen des Parameterspeichers ein Speicher des Parameterspeichers genutzt werden kann, um weitere Daten zu speichern, z.B. um einen Speicher der Funktionsanschlusseinheit zu erweitern. So wird der Speicherbedarf der Funktionsanschlusseinheit reduziert.

In einer weiteren vorteilhaften Ausführungsform weist der Parameterspeicher eine Schnittstelle zur Datenübertragung gemäß einem zweiten Kommunikationsprotokoll auf. Dadurch wird der technische Vorteil erreicht, dass der Speicher des Parameterspeichers über eine weitere Schnittstelle mit Daten, wie z.B. Funktionsmodulparameterdaten, beschrieben und/oder ausgelesen werden kann. Somit wird die Handhabbarkeit gesteigert.

In einer weiteren vorteilhaften Ausführungsform ist das zweite Kommunikationsprotokoll ein USB-Protokoll. Dadurch wird der technische Vorteil erreicht, dass eine Schnittstelle für eine Datenübertragung zur Verfügung gestellt wird.

In einer weiteren vorteilhaften Ausführungsform weist der Parameterspeicher ein Bedienelement auf, mit dem eine Übertragung der Parameterdaten aus dem Parameterspeicher in die Funktionsanschlusseinheit auslösbar ist. Dadurch wird der technische Vorteil erreicht, dass eine Unterbrechung der Datenübertragungsverbindung wieder aufgehoben werden kann, so dass wieder Daten über die Datenübertragungsverbindung von dem Protokolldatensatz zu der Funktionsanschlusseinheit und umgekehrt übertragen werden können. Dann befindet sich die Parametrisierungsschnittstelle wieder in dem Tunnelmodus.

Der Parameterspeicher ist bevorzugt ausgebildet, mit der beschriebenen Funktionsanschlusseinheit wie beschrieben zusammenzuwirken. Der Parameterspeicher weist in weiteren Ausführungsformen daher die Merkmale des im Zusammenhang mit der Funktionsanschlusseinheit beschriebenen Parameterspeichers auf.

Weitere Ausführungsbeispiele werden Bezug nehmend auf die beiliegenden Zeichnungen erläutert. Es zeigen:
- Fig. 1: eine schematische Darstellung eines Kommunikationssystems,
- Fig. 2: eine schematische Darstellung eines Parameterspeichers, und
- Fig. 3A-3D: Parametrisierungskonzept.

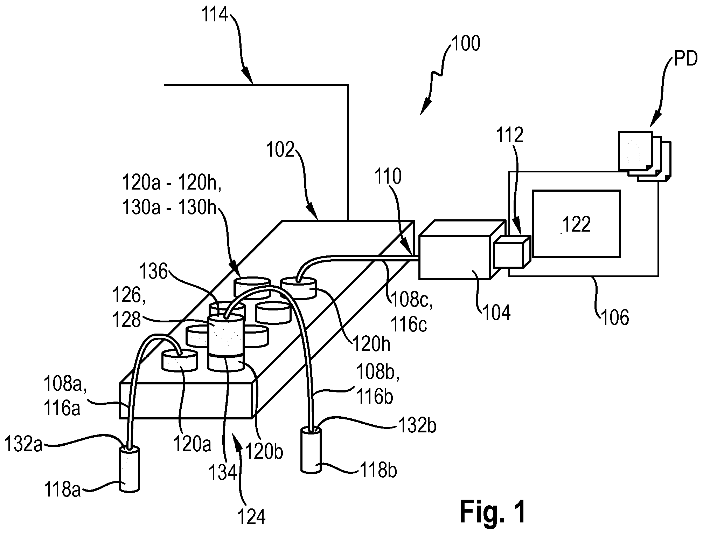

Die Fig. 1 zeigt eine Funktionsanschlusseinheit 102 in einem Kommunikationssystem 100, mit einer optionalen Parametrisierungsschnittstelle 104, einem ersten Funktionsmodul 118a, einem zweiten Funktionsmodul 118b und einen Parameterspeicher 126.

Gemäß einer Ausführungsform verwendet das Kommunikationssystem 100 zur Kommunikation ein Protokoll gemäß I/O-Link bzw. SDCI. Die I/O-Link-Technologie stellt eine Punkt-zu-Punkt-Schnittstelle für den Funktionsmodulanschluss beliebiger Sensorik und Aktuatorik an ein Steuerungssystem zur Verfügung. Die Funktionsanschlusseinheit 102 kann daher beispielsweise ein SDCI-Link-Master bzw. ein I/O-Link-Master sein.

Die Funktionsmodule 118a, 118b sind beispielsweise Aktoren oder Sensoren gemäß der Norm IEC 61131-9.

Gemäß einer Ausführungsform ist die Funktionsanschlusseinheit 102 als ein I/O-Link-Master, die Parametrisierungsschnittstelle 104 als I/O-Link-Device, das Funktionsmodul 118a als SDCI Slave oder I/O-Link-Device, das Funktionsmodul 118b als SDCI Slave oder I/O-Link-Device, und der Parameterspeicher 126 als SDCI Slave oder I/O-Link-Device ausgebildet. Bei den beiden Funktionsmodulen 118a, 118b handelt es sich gemäß einer Ausführungsform um Sensoren oder Aktoren, welche beispielsweise eine Seriennummer oder Parameterdaten wie z.B. Empfindlichkeiten, Schaltverzögerungen oder Kennlinien aufweisen bzw. umsetzen, welche beispielsweise über das I/O-Link-Protokoll lesbar bzw. schreibbar sind. Die I/O-Link-Devices bzw. SDCI Slaves weisen hierzu gemäß einer Ausführungsform einen zusätzlichen kombinierten Schaltzustand- und Datenkanal auf.

Das Kommunikationssystem 100 ist gemäß einer Ausführungsform an einem Feldbus 114 angeschlossen oder anschließbar. Bei dem Feldbus 114 kann es sich z.B. um PROFIBUS, PROFINET, Interbus, AS-i, EVA-CAT oder Powerlink handeln.

Die Funktionsanschlusseinheit 102 weist gemäß einer Ausführungsform Funktionsmodulanschlüsse 120a - 120h auf, die im vorliegenden Beispiel als I/O-Ports ausgebildet sein können. Gemäß einer Ausführungsform sind die Funktionsmodulanschlüsse 120a - 120h als I/O-Link oder SDCI kompatible Schnittstellen 130a -130h für die Kommunikation gemäß einem Kommunikationsprotokoll, beispielsweise I/O-Link bzw. SDCI ausgebildet.

An dem ersten Funktionsmodulanschluss 120a ist eine erste Funktionsmodulanschlussleitung 116a angeschlossen, die eine erste Datenübertragungsverbindung 108a zur Datenübertragung von und zu dem ersten Funktionsmodul 118a bildet. Gemäß einer Ausführungsform ist die erste Funktionsmodulanschlussleitung 116a durch ein Standard 3-Leiter-Sensor-/Aktuatorkabel gebildet. Alternativ kann diese erste Datenübertragungsverbindung 108a drahtlos, z.B. durch eine Funkstrecke, oder durch einen Lichtwellenleiter, gebildet sein. Zum Funktionsmodulanschluss an dem ersten Funktionsmodulanschluss 120a weist das erste Funktionsmodul 118a eine I/O-Link oder SDCI kompatibel ausgebildete Schnittstelle 132a auf.

Ein zweiter Funktionsmodulanschluss 120b der Funktionsanschlusseinheit 102 ist mit dem Parameterspeicher 126 verbunden, der über eine zweite Datenübertragungsverbindung 108b, gebildet durch eine zweite Funktionsmodulanschlussleitung 116b, mit dem zweiten Funktionsmodul 118b zur bidirektionalen Datenübertragung verbunden ist. Gemäß einer Ausführungsform ist die zweite Funktionsmodulanschlussleitung 116b durch ein Standard 3-Leiter-Sensor-/Aktuatorkabel gebildet. Alternativ kann diese zweite Datenübertragungsverbindung 108b drahtlos, z.B. durch eine Funkstrecke, oder durch einen Lichtwellenleiter, gebildet sein. Zum Anschluss an den zweiten Funktionsmodulanschuss 120b weist der Parameterspeicher 126 einen I/O-Link oder SDCI kompatibel ausgebildeten Funktionsmodulparameteranschluss 134 auf. Ferner weist auch das zweite Funktionsmodul 118b eine I/O-Link-Schnittstelle oder SDCI kompatibel ausgebildete Schnittstelle 132b auf, die mit der Funktionsmodule-Schnittstelle 136 des Parameterspeichers 126 verbunden ist. Gemäß einer Ausführungsform ist die Funktionsmodule-Schnittstelle 136 als I/O-Link oder SDCI kompatible Schnittstelle ausgebildet. Der Parameterspeicher 126 weist eine Funktionsmodule-Schnittstelle 136 zum Verbinden mit einer Schnittstelle 132a, 132b eines der Funktionsmodule 118a, 118b auf.

Der Parameterspeicher 126 weist einen Speicher 128 zum Speichern von Daten, beispielsweise von Parameterdaten des zweiten Funktionsmoduls 118b, auf. Bei den Parameterdaten kann es sich beispielsweise um Angaben zum Hersteller, Funktionsmodulnamen oder einen Firmware-Revisionsstand des zweiten Funktionsmoduls 118b handeln. Ferner können die Parameterdaten Empfindlichkeiten, Schaltverzögerungen, Kennlinien oder Wertebereiche der Funktionsmodule 118a, 118b angeben.

An dem weiteren Funktionsmodulanschluss 120h ist die optionale Parametrisierungsschnittstelle 104 angeschlossen. Die Parametrisierungsschnittstelle 104 weist einen Kommunikationsanschluss 110 auf, um eine weitere, dritte Datenübertragungsverbindung 108c über eine dritte Funktionsmodulanschlussleitung 116c mit der Funktionsanschlusseinheit 102 zur Datenübertragung zu bilden. Gemäß einer Ausführungsform ist die dritte Funktionsmodulanschlussleitung 116c durch ein Standard 3-Leiter-Sensor-/Aktuatorkabel gebildet. Alternativ kann diese dritte Datenübertragungsverbindung 108c drahtlos, z.B. durch eine Funkstrecke, oder durch einen Lichtwellenleiter gebildet sein. Gemäß einer Ausführungsform ist die dritte Datenübertragungsverbindung 108c zur bidirektionalen Datenübertragung ausgebildet. Alternativ kann die dritte Datenübertragungsverbindung 108c zur unidirektionalen Datenübertragung ausgebildet sein, um z.B. ein Auslesen oder Empfangen von Parameterdaten von einer Inbetriebnahmesoftware 106 zu ermöglichen. Zum Funktionsmodulanschluss an dem weiteren Funktionsmodulanschuss 120h ist der Kommunikationsanschluss 110 I/O-Link oder SDCI kompatibel ausgebildet.

Die Parametrisierungsschnittstelle 104 weist gemäß einer Ausführungsform einen Parametrisierungsanschluss 112 für die Datenübertragung zu bzw. Kommunikation mit der Inbetriebnahmesoftware 106 auf. Der Parametrisierungsanschluss 112 kann zur bidirektionalen oder zur unidirektionalen Datenübertragung ausgebildet sein, um z.B. ein Auslesen oder Empfangen von Parameterdaten aus bzw. von der Inbetriebnahmesoftware 106 zu ermöglichen.

Der Parametrisierungsanschluss 112 ist gemäß einer Ausführungsform als USB-Schnittstelle ausgeführt, und die Inbetriebnahmesoftware 106 ist gemäß einer Ausführungsform einem Computer, z.B. einem Personal Computer (PC), zugeordnet.

Gemäß einer Ausführungsform wird die Inbetriebnahmesoftware 106 an einem Computer ausgeführt. Die Inbetriebnahmesoftware 106 weist eine Bedienoberfläche 122 auf, mittels welcher eine Parameterbeschreibung PD angezeigt werden kann. Die Parameterbeschreibung PD gibt beispielsweise parametrisierbare Parameter an, welche durch einen Benutzer mittels der Bedienoberfläche 122 parametrisiert werden können, um Parameterdaten zu erhalten. Hierzu kann der Benutzer den Parametern beispielsweise physikalische Werte wie Empfindlichkeit oder Reaktionszeit oder Sensorbereich zuordnen.

Gemäß einer Ausführungsform ist der Kommunikationsanschluss 110 zum Empfang der Funktionsmodulbeschreibungsdaten gemäß einem zweiten Kommunikationsprotokoll ausgebildet. Gemäß einer Ausführungsform handelt es sich bei dem ersten Kommunikationsprotokoll um ein Kommunikationsprotokoll gemäß I/O-Link oder SDCI. Somit führt die Parametrisierungsschnittstelle 104 eine Protokollumwandlung durch, um die gemäß dem zweiten Kommunikationsprotokoll empfangenen Funktionsmodulbeschreibungsdaten an den parametrisierbaren Funktionsmodulanschluss 120a - 120h gemäß dem ersten Kommunikationsprotokoll zu übertragen.

Durch die Inbetriebnahmesoftware 106 sind gemäß einer Ausführungsform die Funktionsmodulbeschreibungsdaten mit Funktionsmodulbeschreibungen abgespeichert und bilden somit die Parameterbeschreibung PD. Die Funktionsmodulbeschreibungen können umfassen: Informationen zu Kommunikationseigenschaften, Informationen zu Funktionsmodulparameterdaten z. B. Empfindlichkeiten, Schaltverzögerungen, Kennlinien oder Wertebereiche, Identifikations-, Prozess- und Diagnosedaten, ein Abbild sowie ein Logo des Herstellers. Funktionsmodulbeschreibungen werden gemäß der I/O-Link Spezifikation auch als I/ODD-Datei (I/O Device Description) bezeichnet. Sie können aus einer oder mehreren XML-Dateien, die ein Funktionsmodul, wie z.B. die beiden Funktionsmodule 118a, 118b, beschreiben und einer Bilddateien im z.B. PNG-Format bestehen.

Die Funktionsmodulbeschreibungsdaten können gemäß einer Ausführungsform den Parameterdaten entsprechen.

Die Bedienoberfläche 122 gehört zu einem Programmierwerkzeug bzw. -tool, das einem Anwender Funktionsmodulbeschreibungen, also die Parameterbeschreibung PD in grafischer Form zur Verfügung stellt und Eingaben des Benutzers erlaubt. Das Programmierwerkzeug bildet die vorgenannte Inbetriebnahmesoftware 106.

Die Funktionsanschlusseinheit 102 weist gemäß einer Ausführungsform ein Bedienelement 124 auf, das gemäß einer Ausführungsform als Taster ausgebildet ist. Die Funktion des Bedienelements 124 wird weiter unten erläutert.

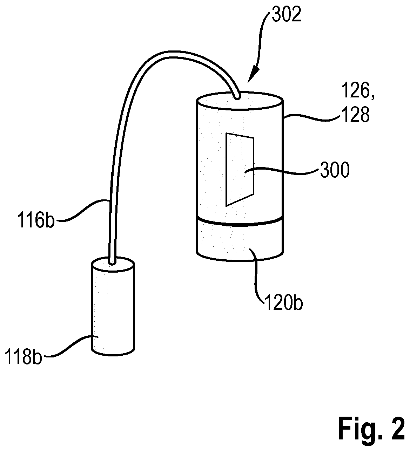

Die Fig. 2 zeigt den Parameterspeicher 126 mit dem Speicher 128, verbunden mit dem Funktionsmodul 118b. Der Parameterspeicher 126 ist ferner mit dem Funktionsmodulanschluss 120b verbunden.

Gemäß einer Ausführungsform weist der Parameterspeicher 126 eine Schnittstelle 300 auf. Die Schnittstelle 300 kann nicht kommunikationssystemkompatibel zum Kommunikationssystem 100 ausgebildet sein. Somit sind gemäß einer Ausführungsform die Kommunikationsanschluss 110 und die Schnittstelle 300 unterschiedlich ausgebildet.

Gemäß einer Ausführungsform ist die Schnittstelle 300 als USB-Schnittstelle ausgebildet.

Über die Schnittstelle 300 kann der Speicher 128 mit Daten beschrieben werden, beispielsweise mit Parameterdaten. Ferner kann der Parameterspeicher 126 gemäß einer Ausführungsform ein Bedienelement 302 aufweisen, das gemäß einer Ausführungsform als Taster ausgebildet ist. Gemäß einer Ausführungsform kann eine Übertragung der Parameterdaten von der Inbetriebnahmesoftware 106 in die Funktionsanschlusseinheit 102 durch Betätigen des Bedienelements 302 ausgelöst werden.

Nachdem die Parameterdaten in die Funktionsanschlusseinheit 102 übertragen wurden, kann der Parameterspeicher 126 in einem Transparentmodus betrieben werden, während dem der Parameterspeicher 126 Daten von der Funktionsanschlusseinheit 102 zu dem an dem Parameterspeicher 126 angeschlossenen Funktionsmodul 118b und/oder Daten von dem an dem Parameterspeicher 126 angeschlossenen Funktionsmodul 118b zu der Funktionsanschlusseinheit 102 weiterleitet. Somit werden Daten in Betrieb des Kommunikationssystems 100, z.B. von dem als Sensor ausgebildeten Funktionsmodul 118b, über die Datenübertragungsverbindung 108b in Form der Funktionsmodulanschlussleitung 116b durch den Parameterspeicher 126 zu dem Funktionsmodulanschluss 120b der Funktionsanschlusseinheit 102 übertragen und von dort über den Feldbus 114 weitergeleitet.

Nach dem Übertragen der Parameterdaten in die Funktionsanschlusseinheit 102 kann der Parameterspeicher 126 gemäß einer Ausführungsform in einem Speicherschreibmodus betrieben werden, während dem der Speicher 128 von der Funktionsanschlusseinheit 102 mit Daten beschrieben wird. Um den Wechsel nach dem Übertragen der Funktionsmodulbeschreibungsdaten in die Funktionsanschlusseinheit 102 in den Speicherschreibmodus aus dem Transparentmodus zu bewirken, sendet die Funktionsanschlusseinheit 102 ein Wake-Up-Signal an den Parameterspeicher 126. Somit wird nach der Übertragung der Parameterdaten PD in die Funktionsanschlusseinheit 102 der Parameterspeicher 126 in einem Speicherschreibmodus betrieben, während dem der Speicher 128 von der Funktionsanschlusseinheit 102 mit Daten beschrieben wird, so dass der Funktionsanschlusseinheit 102 ein erweiterter Speicher während des Betriebs des Kommunikationssystems 100 zur Verfügung steht.

Um eine Datenkollision auf der die Datenübertragungsverbindung 108b bildenden Funktionsmodulanschlussleitung 116b auszuschließen, wird während des Speicherschreibmodus die Datenübertragungsverbindung 108b des Parameterspeichers 126 mit dem Funktionsmodul 118b unterbrochen. Anschließend kann ein Wechsel von dem Speicherschreibmodus in den Transparentmodus erfolgen, damit wieder Daten von dem zweiten Funktionsmodul 118b zu der Funktionsanschlusseinheit 102 und umgekehrt übertragen werden können.

Somit ist es z.B. möglich, nach Austausch eines defekten Funktionsmodules 118a, 118b, wie z.B. einem defekten Sensor, durch zusätzliches Zwischenschalten des Parameterspeichers 126 zwischen dem zugeordneten Funktionsmodulanschluss 120a-120h und dem ausgewechselten Funktionsmodul 118a, 118b aktualisierte Parameterdaten in die Funktionsanschlusseinheit 102 zu übertragen und einen z.B. bereits über den Feldbus 114 eingestellte Parameterdaten z.B. durch Überschreiben zu ändern. Die neu aufzuspielenden Parameterdaten können dabei über die Schnittstelle 300 des Parameterspeichers 126 in den Speicher 128 des Parameterspeichers 126 übertragen werden.

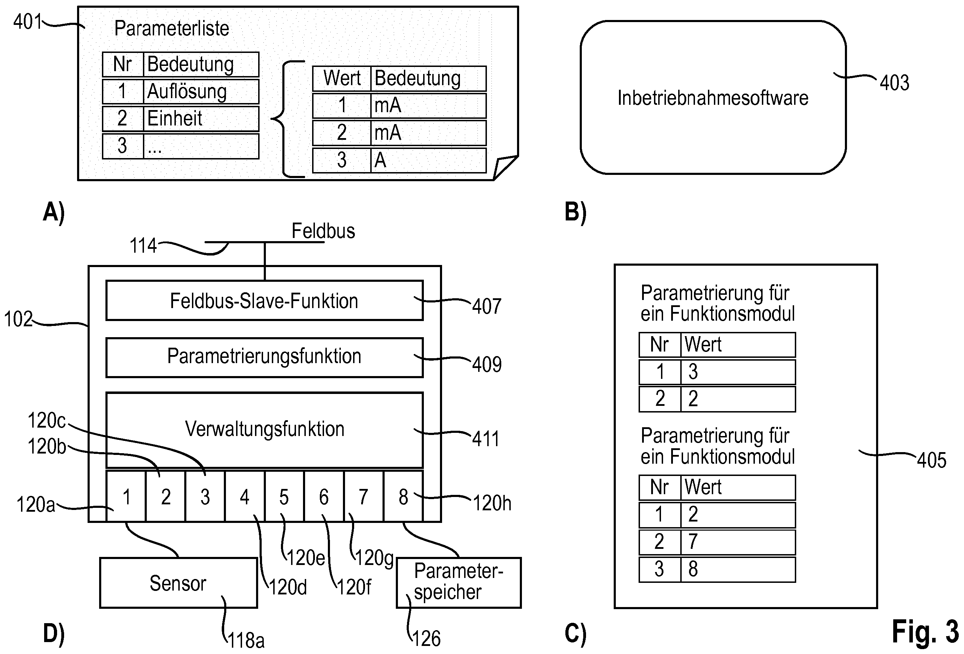

In den Fig. 3A-3D ist ein Parametrisierungskonzept anhand der Funktionsanschlusseinheit 102 dargestellt.

Fig. 3A zeigt eine Parameterliste 401 mit Parametern, wie beispielsweise Auflösung oder physikalische Einheiten. Die Parameterliste 401 wird beispielsweise durch einen Bediener mittels eines Computers, auf welchem die in Fig. 3B dargestellte Inbetriebnahmesoftware 403 ausgeführt wird, in Parameterdaten überführt, welche in den Parameterspeicher 126 geladen werden. Die Inbetriebnahmesoftware 403 kann ferner beispielsweise die Bedienoberfläche 122 implementieren. Daraufhin kann der Parameterspeicher 126 an einem der Funktionsmodulanschlüsse 120a-120h der Funktionsanschlusseinheit 102 und betrieben werden. Wie in Fig. 3C dargestellt können die Parameterdaten 405 Parametrierungen für ein oder mehrere Funktionsmodule 118a, 118b angeben, wie beispielsweise physikalische Werte der gerätespezifischen Parameter.

In Fig. 3D ist eine beispielhafte Struktur der Funktionsanschlusseinheit 102 dargestellt. Die Funktionsanschlusseinheit 102 umfasst eine Feldbus-Slave-Funktionalität 407 zur Kommunikation über den Feldbus 114. Die Feldbus-Slave-Funktionalität 407 kann beispielsweise als Feldbus-Slave-Software eingesetzt werden. Die Funktionsanschlusseinheit 102 umfasst ferner eine Parametrierungsfunktion 409 zur gerätespezifischen Parametrierung der Funktionsmodule 118a, 118b. Die Funktionsanschlusseinheit 102 umfasst ferner eine Verwaltungsfunktionalität 411, welche die Funktionsanschlusseinheit 102 verwaltet. Die Verwaltungsfunktionalität 411 kann beispielsweise im Falle einer Realisierung eines I/O-Link-Masters durch die Funktionsanschlusseinheit 102 eine I/O-Link-Master-Software implementiert sein.

### Bezugszeichenliste

- 100: Kommunikationssystem
- 102: Funktionsanschlusseinheit
- 104: Parametrisierungsschnittstelle
- 106: Inbetriebnahmesoftware, Programmierwerkzeug
- 108a: Datenübertragungsverbindung
- 108b: Datenübertragungsverbindung
- 108c: Datenübertragungsverbindung
- 110: Kommunikationsanschluss
- 112: Parametrisierungsanschluss
- 114: Feldbus
- 116a: Funktionsmodulanschlussleitung
- 116b: Funktionsmodulanschlussleitung
- 116c: Funktionsmodulanschlussleitung
- 118a: Funktionsmodul
- 118b: Funktionsmodul
- 120a: Funktionsmodulanschluss
- 120b: Funktionsmodulanschluss
- 120c: Funktionsmodulanschluss
- 120d: Funktionsmodulanschluss
- 120e: Funktionsmodulanschluss
- 120f: Funktionsmodulanschluss
- 120g: Funktionsmodulanschluss
- 120h: Funktionsmodulanschluss
- 122: Bedienoberfläche
- 124: Bedienelement
- 126: Parameterspeicher
- 128: Speicher
- 130a: Schnittstelle
- 130b: Schnittstelle
- 130c: Schnittstelle
- 130d: Schnittstelle
- 130e: Schnittstelle
- 130f: Schnittstelle
- 130g: Schnittstelle
- 130h: Schnittstelle
- 132a: Schnittstelle
- 132b: Schnittstelle
- 134: Funktionsmodulparameteranschluss
- 136: Funktionsmodule-Schnittstelle

- 300: Schnittstelle
- 302: Bedienelement

- PD: Parameterbeschreibung

- 401: Parameterliste
- 403: Inbetriebnahmesoftware
- 405: Parameterdaten
- 407: Feldbus-Slave-Funktionalität
- 409: Parametrierungsfunktion
- 411: Verwaltungsfunktionalität

## Patentansprüche

1. Anordnung, umfassend eine Funktionsanschlusseinheit (102) und einen Parameterspeicher (126),
wobei die Funktionsanschlusseinheit (102) ausgebildet ist für den Anschluss von Funktionsmodulen (118a, 118b), mit einer Mehrzahl von Funktionsmodulanschlüssen (120a - 120h), an welche die Funktionsmodule (118a, 118b) für eine Kommunikation gemäß einem Kommunikationsprotokoll anschließbar sind; und wobei der Parameterspeicher (126) Parameterdaten (405) zur gerätespezifischen Parametrisierung von zumindest einem Funktionsmodul (118a, 118b) enthält, wobei der Parameterspeicher (126) mit einem Funktionsmodulanschluss (120a - 120h) der Mehrzahl von Funktionsmodulanschlüssen (120a - 120h) verbindbar ist, und wobei die Funktionsanschlusseinheit (102) ausgebildet ist, die Parameterdaten (405) aus dem Parameterspeicher (126) auszulesen und zumindest ein Funktionsmodul (118a, 118b) auf der Basis der ausgelesenen Parameterdaten (405) gerätespezifisch zu parametrisieren, wobei der Parameterspeicher (126) ausgebildet ist, ein Kennsignal auszusenden, das den Parameterspeicher (126) identifiziert, und wobei die Funktionsanschlusseinheit (102) ausgebildet ist, den Parameterspeicher (126) an dem Funktionsmodulanschluss (120a - 120h) auf der Basis des Kennsignals zu erkennen oder von einem Funktionsmodul (118a, 118b) zu unterscheiden,
wobei ein Funktionsmodul (118a, 118b) mit dem Parameterspeicher (126) verbindbar ist oder als Teil der Anordnung verbunden ist, wobei die Funktionsanschlusseinheit (102) ausgebildet ist, das Funktionsmodul (118a, 118b) über den Funktionsmodulanschluss (120a - 120h), mit dem der Parameterspeicher (126) elektrisch verbunden ist, auf der Basis der Parameterdaten (405) gerätespezifisch zu parametrisieren, und
**dadurch gekennzeichnet, dass** der Parameterspeicher (126) in einen Transparentmodus schaltbar ist, in dem Daten von der Funktionsanschlusseinheit (102) zu dem zumindest einem Funktionsmodul (118a, 118b) durch den Parameterspeicher (126) und Daten von dem zumindest einem Funktionsmodul (118a, 118b) zu der Funktionsanschlusseinheit (102) durch den Parameterspeicher (126) weiterleitbar sind, um einen Betrieb des mit dem Parameterspeicher verbundenen Funktionsmoduls zu ermöglichen.

2. Anordnung nach Anspruch 1, wobei die Funktionsanschlusseinheit (102) ein Master gemäß dem Single-Drop Digital Communication Interface for Small Sensors and Actuators SDCI, Protokoll insbesondere ein I/O-Linkmaster, ist

3. Anordnung nach einem der vorhergehenden Ansprüche, wobei der Parameterspeicher (126) ausgebildet ist, die Parameterdaten (405) von dem Parameterspeicher (126) zu der Funktionsanschlusseinheit (102) über den Funktionsmodulanschluss (120a - 120h) zu übertragen.

4. Anordnung nach einem der vorhergehenden Ansprüche, welche ausgebildet ist, die ausgelesenen Parameterdaten (405) zu speichern.

5. Anordnung nach Anspruch 4, wobei der Parameterspeicher (126) von dem Funktionsmodulanschluss (120a - 120h) lösbar ist, wobei mit dem Funktionsmodulanschluss (120a - 120h) ein Funktionsmodul (118a, 118b) elektrisch verbindbar ist, und wobei die Funktionsanschlusseinheit (102) ausgebildet ist, dasjenige Funktionsmodul (118a, 118b), das anstelle des Parameterspeichers (126) mit dem Funktionsmodulanschluss (120a - 120h) verbunden ist, unter Verwendung der in der Funktionsanschlusseinheit (102) gespeicherten Parameterdaten (405) gerätespezifisch zu parametrisieren.

6. Anordnung nach einem der vorhergehenden Ansprüche, wobei die Funktionsanschlusseinheit (102) ausgebildet ist, den Parameterspeicher (126) in einen Speicherschreibmodus zu schalten, in dem der Parameterspeicher (126) mit Daten beschreibbar ist.

7. Anordnung nach einem der vorhergehenden Ansprüche, wobei der Parameterspeicher (126) eine Schnittstelle (300) zur Datenübertragung gemäß einem zweiten Kommunikationsprotokoll, insbesondere gemäß dem USB-Protokoll, aufweist.

8. Anordnung nach einem der vorhergehenden Ansprüche, wobei der Parameterspeicher (126) ein Bedienelement (302) aufweist, mit dem eine Übertragung der Parameterdaten (405) aus dem Parameterspeicher (126) in die Funktionsanschlusseinheit (102) auslösbar ist.

9. Anordnung nach einem der vorhergehenden Ansprüche, wobei eine Parametrisierungsschnittstelle (104) eine Kommunikationsschnittstelle der Funktionsanschlusseinheit (102) für die Übertragung von Daten, insbesondere von Parameterdaten (405), Steuerbefehlen zur Steuerung der Funktionsmodule (118a, 118b) oder zum Auslesen von Daten aus der Funktionsmodulen (118a, 118b) oder zur Steuerung der Funktionsanschlusseinheit (102) oder zum Auslesen von Daten aus der Funktionsanschlusseinheit (102), bildet.

10. Parameterspeicher (126) mit einem Funktionsmodulparameteranschluss (134), welcher an einem Funktionsmodulanschluss (120a - 120h) einer Funktionsanschlusseinheit (102) für Funktionsmodule (118a, 118b) anschließbar ist, wobei der Parameterspeicher (126) ausgebildet ist, Parameterdaten (405) für die gerätespezifische Parametrisierung von zumindest einem Funktionsmodul (118a, 118b) über den Funktionsmodulparameteranschluss (134) bereitzustellen,
wobei der Parameterspeicher (126) ausgebildet ist, ein Kennsignal auszusenden, das den Parameterspeicher (126) identifiziert, und wobei die Funktionsanschlusseinheit (102) ausgebildet ist, den Parameterspeicher (126) an dem Funktionsmodulanschluss (120a - 120h) auf der Basis des Kennsignals zu erkennen oder von einem Funktionsmodul (118a, 118b) zu unterscheiden, und
**dadurch gekennzeichnet, dass** der Parameterspeicher (126) in einen Transparentmodus überführbar ist, um eine direkte Kommunikationsverbindung zwischen dem Funktionsmodulparameteranschluss (134) des Parameterspeichers (126) und dem Funktionsmodul (118a, 118b) herzustellen.

11. Parameterspeicher (126) nach Anspruch 10, wobei der Parameterspeicher (126) ausgebildet ist, Parameterdaten (405) für die gerätespezifische Parametrisierung von zumindest einem Funktionsmodul (118a, 118b) über den Funktionsmodulparameteranschluss (134), insbesondere ansprechend auf den Empfang einer Aufforderung, auszusenden.

## Claims

1. An arrangement comprising a function connection unit (102) and a parameter memory (126),
wherein the function connection unit (102) is configured for connecting functional modules (118a, 118b) comprising a plurality of functional module terminals (120a - 120h) to which the functional modules (118a, 118b) are connectable for a communication according to a communication protocol; and wherein the parameter memory (126) comprises parameter data (405) for device-specific parameterization of at least one functional module (118a, 118b), wherein the parameter memory (126) is connectable to a functional module terminal (120a - 120h) of the plurality of functional module terminals (120a - 120h) and wherein the function connection unit (102) is configured to read the parameter data (405) from the parameter memory (126) and parameterize at least one functional module (118a, 118b) in a device-specific manner on the basis of the read parameter data (405),
wherein the parameter memory (126) is configured to send out a characteristic signal which identifies the parameter memory (126), and wherein the function connection unit (102) is configured to detect the parameter memory (126) or to differentiate it from a functional module (118a, 118b) at the functional module terminal (120a - 120h) on the basis of the characteristic signal,
wherein a functional module (118a, 118b) is connectable or is connected as part of the arrangement to the parameter memory (126), wherein the function connection unit (102) is configured to parameterize, on the basis of the parameter data (405), the functional module (118a, 118b) in a device-specific manner via the functional module terminal (120a - 120h) to which the parameter memory (126) is electrically connected, and
**characterized in that** the parameter memory (126) is switchable into a transparent mode in which data from the function connection unit (102) can be passed on to the at least one functional module (118a, 118b) by the parameter memory (126) and data from the at least one functional module (118a, 118b) can be passed on to the function connection unit (102) by the parameter memory (126), in order to enable the functional module connected to the parameter memory to operate.

2. The arrangement according to claim 1, wherein the function connection unit (102) is a master, in particular an I/O link master, according to the single-drop digital communication interface for small sensors and actuators, SDCI, protocol.

3. The arrangement according to one of the preceding claims, wherein the parameter memory (126) is configured to transmit the parameter data (405) from the parameter memory (126) to the function connection unit (102) via the functional module terminal (120a - 120h).

4. The arrangement according to one of the preceding claims, which is configured to store the read parameter data (405).

5. The arrangement according to claim 4, wherein the parameter memory (126) is detachable from the functional module terminal (120a - 120h), wherein a functional module (118a, 118b) is electrically connectable to the functional module terminal (120a - 120h), and wherein the function connection unit (102) is configured to parameterize that functional module (118a, 118b), which is connected to the functional module terminal (120a - 120h) instead of the parameter memory (126), in a device-specific manner using the parameter data (405) stored in the function connection unit (102).

6. The arrangement according to one of the preceding claims, wherein the function connection unit (102) is configured to switch the parameter memory (126) into a memory write mode in which the parameter memory (126) is writable with data.

7. The arrangement according to one of the preceding claims, wherein the parameter memory (126) has an interface (300) for transmitting data according to a second communication protocol, in particular according to the USB protocol.

8. The arrangement according to one of the preceding claims, wherein the parameter memory (126) has an operator control element (302) with which a transmission of the parameter data (405) from the parameter memory (126) into the function connection unit (102) is triggerable.

9. The arrangement according to one of the preceding claims, wherein a parameterization interface (104) forms a communication interface of the function connection unit (102) for the transmission of data, in particular parameter data (405), for control commands for controlling the functional modules (118a, 118b) or reading data from the functional modules (118a, 118b) or for controlling the function connection unit (102) or for reading data from the function connection unit (102).

10. A parameter memory (126) comprising a functional module parameter terminal (134) which is connectable to a functional module terminal (120a - 120h) of a function connection unit (102) for functional modules (118a, 118b), wherein the parameter memory (126) is configured to provide parameter data (405) for the device-specific parameterization of at least one functional module (118a, 118b) via the functional module parameter terminal (134),
wherein the parameter memory (126) is configured to send out a characteristic signal which identifies the parameter memory (126), and wherein the function connection unit (102) is configured to detect the parameter memory (126) or to differentiate it from a functional module (118a, 118b) at the functional module terminal (120a - 120h) on the basis of the characteristic signal, and
**characterized in that** the parameter memory (126) is transformable into a transparent mode in order to establish a direct communication connection between the functional module parameter terminal (134) of the parameter memory (126) and the functional module (118a, 118b).

11. The parameter memory (126) according to claim 10, wherein the parameter memory (126) is configured to send out parameter data (405) for the device-specific parameterization of at least one functional module (118a, 118b) via the functional module parameter terminal (134), in particular in response to the reception of a request.

## Revendications

1. Agencement, comprenant une unité fonctionnelle de connexion (102) et une mémoire de paramètres (126),
l'unité fonctionnelle de connexion (102) étant réalisée pour connecter des modules de fonction (118a, 118b), comprenant une pluralité de ports pour module de fonction (120a à 120h) auxquels les modules de fonction (118a, 118b) peuvent être connectés pour une communication selon un protocole de communication ; et la mémoire de paramètres (126) contenant des données de paramètre (405) pour le paramétrage spécifique à un appareil d'au moins un module de fonction (118a, 118b), la mémoire de paramètres (126) pouvant être reliée à un port pour module de fonction (120a à 120h) de la pluralité de ports pour module de fonction (120a à 120h), et l'unité fonctionnelle de connexion (102) étant réalisée pour lire les données de paramètre (405) à partir de la mémoire de paramètres (126) et pour paramétrer de manière spécifique à un appareil au moins un module de fonction (118a, 118b) sur la base des données de paramètre (405) lues, dans lequel la mémoire de paramètres (126) est réalisée pour émettre un signal d'identification qui identifie la mémoire de paramètres (126), et l'unité fonctionnelle de connexion (102) est réalisée pour reconnaître la mémoire de paramètres (126) au port pour module de fonction (120a à 120h) sur la base du signal d'identification ou pour la distinguer d'un module de fonction (118a, 118b),
un module de fonction (118a, 118b) pouvant être relié à la mémoire de paramètres (126) ou étant relié comme une partie de l'agencement, l'unité fonctionnelle de connexion (102) étant réalisée pour paramétrer de manière spécifique à un appareil le module de fonction (118a, 118b), par l'intermédiaire du port pour module de fonction (120a à 120h) auquel la mémoire de paramètres (126) est reliée électriquement, sur la base des données de paramètre (405), et
**caractérisé en ce que** la mémoire de paramètres (126) peut être commutée sur un mode transparent dans lequel des données de l'unité fonctionnelle de connexion (102) peuvent être retransmises audit au moins un module de fonction (118a, 118b) par la mémoire de paramètres (126), et des données dudit au moins un module de fonction (118a, 118b) peuvent être retransmises à l'unité fonctionnelle de connexion (102) par la mémoire de paramètres (126) afin de permettre un fonctionnement du module de fonction relié à la mémoire de paramètres.

2. Agencement selon la revendication 1, dans lequel l'unité fonctionnelle de connexion (102) est un maître selon le protocole « Single-Drop Digital Communication Interface for Small Sensors and Actuators », SDCI, en particulier un maître des liens d'E/S.

3. Agencement selon l'une quelconque des revendications précédentes, dans lequel la mémoire de paramètres (126) est réalisée pour transmettre les données de paramètre (405) de la mémoire de paramètres (126) à l'unité fonctionnelle de connexion (102) par le port pour module de fonction (120a à 120h).

4. Agencement selon l'une quelconque des revendications précédentes, qui est réalisé pour stocker les données de paramètre (405) lues.

5. Agencement selon la revendication 4, dans lequel la mémoire de paramètres (126) peut être déconnectée du port pour module de fonction (120a à 120h), un module de fonction (118a, 118b) pouvant être relié électriquement au port pour module de fonction (120a à 120h), et dans lequel l'unité fonctionnelle de connexion (102) est réalisée pour paramétrer de manière spécifique à un appareil le module de fonction (118a, 118b) qui est relié au port pour module de fonction (120a à 120h) au lieu de la mémoire de paramètres (126) en utilisant les données de paramètre (405) stockées dans l'unité fonctionnelle de connexion (102).

6. Agencement selon l'une quelconque des revendications précédentes, dans lequel l'unité fonctionnelle de connexion (102) est réalisée pour commuter la mémoire de paramètres (126) dans un mode d'écriture en mémoire dans lequel il est possible d'écrire des données dans la mémoire de paramètres (126) .

7. Agencement selon l'une quelconque des revendications précédentes, dans lequel la mémoire de paramètres (126) présente une interface (300) pour la transmission de données selon un deuxième protocole de communication, en particulier selon le protocole USB.

8. Agencement selon l'une quelconque des revendications précédentes, dans lequel la mémoire de paramètres (126) présente un élément de commande (302) qui permet de déclencher une transmission des données de paramètre (405) de la mémoire de paramètres (126) à l'unité fonctionnelle de connexion (102).

9. Agencement selon l'une quelconque des revendications précédentes, dans lequel une interface de paramétrage (104) forme une interface de communication de l'unité fonctionnelle de connexion (102) pour la transmission de données, en particulier de données de paramètre (405), d'instructions de commande pour commander les modules de fonction (118a, 118b) ou pour lire des données à partir des modules de fonction (118a, 118b) ou pour commander l'unité fonctionnelle de connexion (102) ou pour lire des données à partir de l'unité fonctionnelle de connexion (102) .

10. Mémoire de paramètres (126) comprenant un port de paramétrage de module de fonction (134) qui peut être connecté à un port pour module de fonction (120a à 120h) d'une unité fonctionnelle de connexion (102) pour des modules de fonction (118a, 118b), la mémoire de paramètres (126) étant réalisée pour fournir des données de paramètre (405) pour le paramétrage spécifique à un appareil d'au moins un module de fonction (118a, 118b) par l'intermédiaire du port de paramétrage de module de fonction (134),
la mémoire de paramètres (126) étant réalisée pour émettre un signal d'identification qui identifie la mémoire de paramètres (126), et l'unité fonctionnelle de connexion (102) étant réalisée pour reconnaître la mémoire de paramètres (126) au port pour module de fonction (120a à 120h) sur la base du signal d'identification ou pour la distinguer d'un module de fonction (118a, 118b), et
**caractérisée en ce que** la mémoire de paramètres (126) peut être mise dans un mode transparent pour établir une liaison de communication directe entre le port de paramétrage de module de fonction (134) de la mémoire de paramètres (126) et le module de fonction (118a, 118b).

11. Mémoire de paramètres (126) selon la revendication 10, la mémoire de paramètres (126) étant réalisée pour émettre des données de paramètre (405) pour le paramétrage spécifique à un appareil d'au moins un module de fonction (118a, 118b) par l'intermédiaire du port de paramétrage de module de fonction (134), en particulier en réponse à la réception d'une demande.
